# EUROPEAN PATENT APPLICATION

(11) **EP 4 841 107 A2**
(43) Date of publication of application: **18.11.2026**
(21) Application number: 26202849.1
(22) Date of filing: 17.04.2023
(51) Int. Cl.: F04B 35/04

(54) **VIBRATION CONTROL DEVICE AND HERMETIC COMPRESSOR USING SAME**

(30) Priority: 18.04.2022 JP 2022068252
(62) Document number(s) of the earlier application(s) in accordance with Art. 76 EPC: 23791830.5 / 4 513 056
(71) Applicant: Panasonic Corporation, Osaka 571-8501 (JP)
(72) Inventor: TOYODA, Amon, Kadoma-shi, Osaka, 571-0057 (JP); TSUBOI, Kousuke, Kadoma-shi, Osaka, 571-0057 (JP); YAGI, Akio, Kadoma-shi, Osaka, 571-0057 (JP)
(74) Representative: Eisenführ Speiser

(57) **Abstract**

A vibration-damping device (18) according to the present invention includes: a plate-shaped elastic member (17) having elasticity and deformable to be in contact with a surface of a structure that vibrates; and a holding member (16) that holds the elastic member (17) in close contact with the surface of the structure. The holding member (16) is fixed in part to the surface of the structure, with a given gap between the surface of the structure and the holding member (16). The elastic member (17) is held between the holding member (16) and the surface of the structure and in contact with the surface of the structure without being fixed to the surface of the structure. The vibration-damping device (18) is used, for example, in a hermetic compressor. A hermetic enclosure (1a) of the hermetic compressor is the structure, and the vibration-damping device (18) is located on an inner surface of the hermetic enclosure (1a).

## Description

### Technical Field

The present invention relates to: a vibration-damping device used in a machine including a structure that vibrates, the vibration-damping device being adapted to reduce, mitigate, or suppress vibration of the structure; and a hermetic compressor which is a typical example of a machine using the vibration-damping device.

### Background Art

Conventionally, techniques for reducing, mitigating, or suppressing vibration occurring during operation of a machine (vibration-damping techniques) have been investigated. In particular, in the event that vibration caused by a vibration source is transmitted to a given object (structure), loud noise occurs if the frequency of the vibration transmitted from the vibration source coincides with the resonance frequency of the object to which the vibration is transmitted. Thus, reducing, mitigating, or suppressing vibration (vibration-damping action) can serve as a countermeasure against noise.

Examples of machines in which vibration occurs include hermetic compressors. A usual hermetic compressor includes a hermetic enclosure, which houses a compression mechanism such as a reciprocating-type, rotary-type, or scroll-type compression mechanism. The compression mechanism performs a compression process in which the compression mechanism sucks, compresses, and discharges a refrigerant.

In the compression process, pulsation occurs and is transmitted to the hermetic enclosure via a refrigerant gas or lubricating oil present in the hermetic enclosure, and the hermetic enclosure is excited and vibrates. The frequency of the vibration depends on the rotational speed at which the compression mechanism operates. During the compression process, a suction/discharge valve of the compression mechanism emits noise such as knocking noise. This noise is also transmitted to the hermetic enclosure via a solid contact portion of the compression mechanism, thus producing vibration.

As stated above, loud noise occurs if the frequency of the vibration produced as described above coincides with the resonance frequency of such an object (structure) as the hermetic enclosure. In addition, noise such as knocking noise is a harmonic having a frequency in the human hearing range, and transmission of such a harmonic sound (vibration) to the hermetic enclosure could enhance the vibration of the hermetic enclosure, resulting in further noise generation.

In the field of hermetic compressors, techniques have been conventionally proposed in which a configuration having a vibration-damping action is used to reduce noise generated by a hermetic compressor. For example, Patent Literature 1 discloses a technique in which an elastic member is directly fixed to a hermetic enclosure of a hermetic compressor. Patent Literature 2 discloses a technique using a vibration-damping member having a contact portion that elastically contacts the surface of a hermetic enclosure.

In the technique disclosed in Patent Literature 1, the elastic member is fixed to and in elastic contact with the inner surface of the hermetic enclosure. This can produce a contact friction damping effect over a relatively wide frequency band. In the hermetic compressor disclosed in Patent Literature 1, as shown in FIG. 12, a vibration-damping plate 102 having a plurality of contact portions 104a to 104f is fixed by welding to a hermetic enclosure 101 at a fixed portion 103. The vibration-damping plate 102 corresponds to the elastic member.

However, the technique as disclosed in Patent Literature 1, in which an elastic member (vibration-damping plate 102) is fixed to and in elastic contact with a structure (hermetic enclosure 101), can, as pointed out in Patent Literature 2, fail to provide a sufficient noise-preventing effect.

In the hermetic compressor disclosed in Patent Literature 2, a vibration-damping member 202 is used which, as shown in FIGS. 13A and 13B, includes a fixed portion 204 fixed to a hermetic enclosure 201, a free end 203 opposite from the fixed portion 204, and a connection portion 206 connecting the fixed portion 204 to the free end 203.

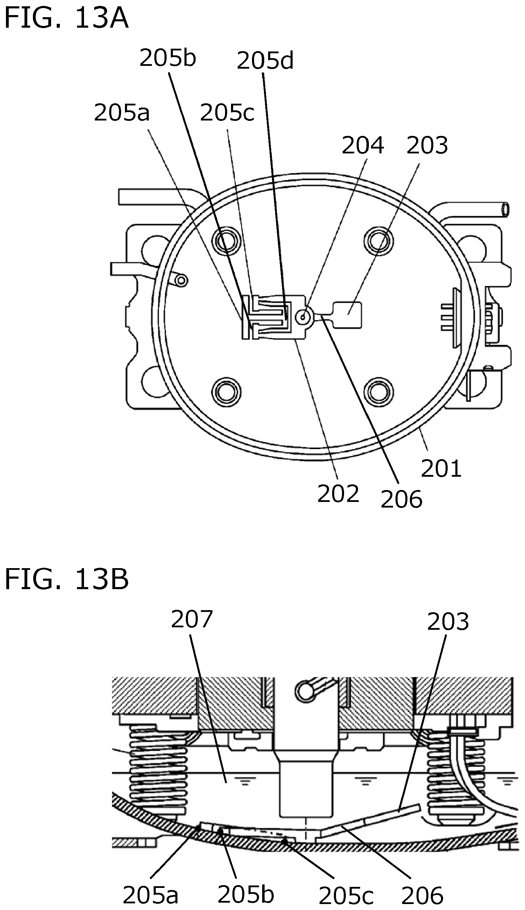

In the vibration-damping member 202, a part other than the free end 203 includes a plurality of contact portions 205a to 205d that are in elastic contact with the surface of the hermetic enclosure 201. This allows the free end 203 of the vibration-damping member 202 to have a natural frequency substantially equal to the natural frequency of the hermetic enclosure 201, thus achieving a satisfactory vibration-damping action. FIGS. 13A and 13B illustrate a configuration in which the vibration-damping member 202 is located on the bottom surface of the hermetic enclosure 201 and immersed in a lubricating oil 207.

### Citation List

### Patent Literature

PTL 1: Japanese Laid-Open Patent Application Publication No. H02-159440
PTL 2: Japanese Patent No. 6677948

### Summary of Invention

### Technical Problem

The vibration-damping member 202 disclosed in Patent Literature 2 is specialized for use in hermetic compressors. Thus, the vibration-damping member 202 is relatively complicated in configuration as it includes the plurality of contact portions 205a to 205d and further includes the free end 203 located across the connection portion 206 from the plurality of contact portions 205a to 205d. There is a demand for a vibration-damping device having a simple configuration and applicable not only in the field of hermetic compressors but also in other fields.

The present invention has been made to solve the problem as described above, and an object of the present invention is to provide: a vibration-damping device applicable not only in the field of hermetic compressors but also in other fields and able to achieve a satisfactory vibration-damping action; and a hermetic compressor using the vibration-damping device.

### Solution to Problem

In order to solve the problem as described above, a vibration-damping device according to the present invention includes: a plate-shaped elastic member having elasticity and deformable to be in contact with a surface of a structure that vibrates; and a holding member that holds the elastic member in contact with the surface of the structure, wherein the holding member is fixed in part to the surface of the structure, with a given gap between the surface of the structure and the holding member, and the elastic member is held between the holding member and the surface of the structure and in contact with the surface of the structure without being fixed to the surface of the structure.

In the above configuration, the holding member holds the plate-shaped elastic member in contact with the surface of the structure, and the elastic member is in contact with the structure without being fixed to the surface of the structure. Thus, the elastic member is kept in contact with the structure that vibrates without being fixed to the structure. As a result, in the event of vibration of the structure, the elastic member exhibits an elastic action that successfully suppresses or mitigates the vibration.

The elastic member is in contact with the surface of the structure by being held between the surface of the structure and the holding member fixed in part to the surface of the structure. Thus, there is no need to employ any complicated configuration, and the vibration-damping device can have a simple configuration.

Furthermore, the quality of contact of the elastic member with the surface of the structure depends on the elasticity of the elastic member, and the extent of contact over which the elastic member is in contact with the surface of the structure depends on the area of the elastic member. Since the elastic member is a plate member having elasticity, the quality or extent of contact of the elastic member can be easily adjusted. This makes it easier to achieve vibration-damping performance suitable for the vibration which occurs in the structure.

In order to solve the problem as described above, a hermetic compressor according to the present invention includes: a hermetic enclosure; an electric element including a stator and a rotor; and a compression element driven by the electric element to compress a fluid, wherein the electric element and the compression element are housed in the hermetic enclosure, a lubricating oil is retained in the hermetic enclosure, the hermetic compressor further includes a vibration-damping device attached to an inner surface of the hermetic enclosure, the vibration-damping device includes a plate-shaped elastic member having elasticity and deformable to be in contact with the inner surface of the hermetic enclosure, and a holding member that holds the elastic member in close contact with the inner surface of the hermetic enclosure, the holding member is fixed in part to the inner surface of the hermetic enclosure, with a gap of a given width between the inner surface of the hermetic enclosure and the holding member, and the elastic member is held between the holding member and the inner surface of the hermetic enclosure and in contact with the inner surface of the hermetic enclosure without being fixed to the surface of the structure.

In the above configuration, the hermetic compressor includes the vibration-damping device configured to use the holding member to hold the plate-shaped elastic member in contact with the hermetic enclosure without fixing the elastic member to the hermetic enclosure. Thus, vibration of the hermetic enclosure can be reduced, mitigated, or suppressed (damped), and noise arising from the vibration of the hermetic enclosure can also be reduced.

Furthermore, the vibration-damping device included in the hermetic compressor can exhibit a friction damping effect on three-dimensional vibration of the hermetic enclosure. This makes it possible to attenuate a plurality of resonance frequency peaks of the hermetic enclosure. Thus, for example, when the hermetic compressor is of a reciprocating type, harmonic noise specific to the reciprocating-type hermetic compressor and having a frequency in a resonance frequency band can be reliably reduced.

The above and further objects, features and advantages of the present invention will be more apparent from the following detailed description of preferred embodiments with reference to the accompanying drawings.

### Advantageous Effects of Invention

The present invention can provide: a vibration-damping device configured as described above which is applicable not only in the field of hermetic compressors but also in other fields and able to achieve a satisfactory vibration-damping action; and a hermetic compressor using the vibration-damping device.

### Brief Description of Drawings

FIG. 1 is a cross-sectional view showing an example of the configuration of a hermetic compressor according to an embodiment of the present disclosure.
FIG. 2 is a plan view showing an example of the configuration on the inner surface of an upper hermetic enclosure of a hermetic enclosure of the hermetic compressor of FIG. 1.
FIG. 3 is a partial cross-sectional view showing an example of the configuration of a vibration-damping device according to the present embodiment, the vibration-damping device being located on the upper hermetic enclosure of FIG. 2.
FIG. 4 is a plan view showing an example of the configuration on the inner surface of a lower hermetic enclosure of the hermetic enclosure of the hermetic compressor of FIG. 1.
FIG. 5 is a partial cross-sectional view showing an example of the configuration of a vibration-damping device according to the present embodiment, the vibration-damping device being located on the lower hermetic enclosure of FIG. 4.
FIG. 6 is a schematic process diagram showing how to attach the vibration-damping device located on the upper hermetic enclosure of FIG. 2.
FIG. 7A juxtaposes a plan view and a cross-sectional view of an example of a holding member of the vibration-damping device of FIG. 3 or 5, and FIGS. 7B and 7C are plan views showing other examples of the holding member of FIG. 7A.
FIG. 8A juxtaposes a plan view and a cross-sectional view of an example of an elastic member of the vibration-damping device of FIG. 3 or 5, and FIG. 8B is a partial cross-sectional view showing an example of a positioning protrusion of the elastic member of FIG. 8A.
FIGS. 9A to 9C juxtapose plan views and cross-sectional views showing other examples of the elastic member of FIG. 8A.
FIG. 10A is a graph showing the vibration level-versus-frequency relationships in a typical example of the present disclosure and a comparative example, and FIG. 10B is a graph showing the noise level-versus-frequency relationships in the example and the comparative example.
FIG. 11A is a graph showing the vibration level-versus-frequency relationships in another typical example of the present disclosure and another comparative example, and FIG. 11B is a graph showing the noise level-versus-frequency relationships in the example and the comparative example.
FIG. 12 is a perspective view showing an example of an elastic member included in a hermetic compressor described in Patent Literature 1.
FIG. 13A is a top view showing an example of a configuration in which a vibration-damping member included in a hermetic compressor described in Patent Literature 2 is located on a bottom surface of a hermetic enclosure, and FIG. 13B is a partial cross-sectional view showing the vibration-damping member of FIG. 13A as immersed in a lubricating oil.

### Description of Embodiments

A vibration-damping device according to the present disclosure includes: a plate-shaped elastic member having elasticity and deformable to be in contact with a surface of a structure that vibrates; and a holding member that holds the elastic member in contact with the surface of the structure, wherein the holding member is fixed in part to the surface of the structure, with a given gap between the surface of the structure and the holding member, and the elastic member is held between the holding member and the surface of the structure and in contact with the surface of the structure without being fixed to the surface of the structure.

In the above configuration, the holding member holds the plate-shaped elastic member in contact with the surface of the structure, and the elastic member is in contact with the structure without being fixed to the surface of the structure. Thus, the elastic member is kept in contact with the structure that vibrates without being fixed to the structure. As a result, in the event of vibration of the structure, the elastic member exhibits an elastic action that successfully suppresses or mitigates the vibration.

Additionally, the elastic member is in contact with the surface of the structure by being held between the surface of the structure and the holding member fixed in part to the surface of the structure. Thus, there is no need to employ any complicated configuration, and the vibration-damping device can have a simple configuration.

Furthermore, the quality of contact of the elastic member with the surface of the structure depends on the elasticity of the elastic member, and the extent of contact over which the elastic member is in contact with the surface of the structure depends on the area of the elastic member. Since the elastic member is a plate member having elasticity, the quality or extent of contact of the elastic member can be easily adjusted. This makes it easier to achieve vibration-damping performance suitable for the vibration which occurs in the structure.

In the vibration-damping device configured as described above, the surface of the structure may be curved, and the holding member may include a portion having a curvature conforming to the curved surface of the structure.

In the vibration-damping device configured as described above, the plate-shaped elastic member may include a corner or a longitudinal end shaped as a convex curve.

In the vibration-damping device configured as described above, the elastic member may include opposite surfaces, one of which is a non-contact surface that does not contact the surface of the structure, the non-contact surface may include a plurality of protrusions, and the holding member may include a plurality of holes each of which is located to receive a corresponding one of the plurality of protrusions.

In the vibration-damping device configured as described above, the holding member may include a plate-shaped portion that holds the elastic member, and the plate-shaped portion may be thicker than the elastic member.

In the vibration-damping device configured as described above, the holding member may hold the elastic member while biasing the elastic member toward the surface of the structure.

In the vibration-damping device configured as described above, the elastic member may be made of a metal material and quench-hardened.

In the vibration-damping device configured as described above, the structure may be a hermetic enclosure of a hermetic compressor, and the surface of the structure may be an inner surface of the hermetic enclosure.

A hermetic compressor according to the present disclosure includes: a hermetic enclosure; an electric element including a stator and a rotor; and a compression element driven by the electric element to compress a fluid, wherein the electric element and the compression element are housed in the hermetic enclosure, a lubricating oil is retained in the hermetic enclosure, the hermetic compressor further includes a vibration-damping device attached to an inner surface of the hermetic enclosure, the vibration-damping device includes a plate-shaped elastic member having elasticity and deformable to be in contact with the inner surface of the hermetic enclosure, and a holding member that holds the elastic member in close contact with the inner surface of the hermetic enclosure, the holding member is fixed in part to the inner surface of the hermetic enclosure, with a gap of a given width between the inner surface of the hermetic enclosure and the holding member, and the elastic member is held between the holding member and the inner surface of the hermetic enclosure and in contact with the inner surface of the hermetic enclosure without being fixed to the surface of the structure.

In the above configuration, the hermetic compressor includes the vibration-damping device configured to use the holding member to hold the plate-shaped elastic member in contact with the hermetic enclosure without fixing the elastic member to the hermetic enclosure. Thus, vibration of the hermetic enclosure can be reduced, mitigated, or suppressed (damped), and noise arising from the vibration of the hermetic enclosure can also be reduced.

Furthermore, the vibration-damping device included in the hermetic compressor can exhibit a friction damping effect on three-dimensional vibration of the hermetic enclosure. This makes it possible to attenuate a plurality of resonance frequency peaks of the hermetic enclosure. Thus, for example, when the hermetic compressor is of a reciprocating type, harmonic noise specific to the reciprocating-type hermetic compressor and having a frequency in a resonance frequency band can be reliably reduced.

In the hermetic compressor configured as described above, the vibration-damping device may be attached to at least an upper inner surface of the hermetic enclosure or a lower inner surface of the hermetic enclosure.

Hereinafter, exemplary embodiments of the present disclosure will be described with reference to the drawings. The same or equivalent elements are denoted by the same reference signs throughout the drawings and will not be described repeatedly.

### [Example of configuration of hermetic compressor]

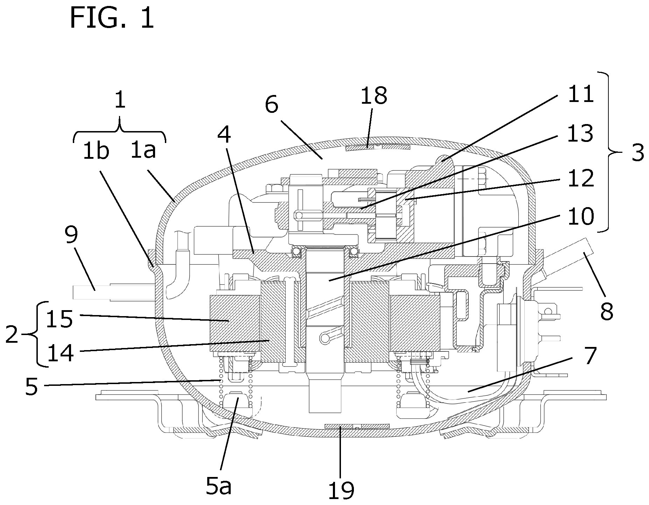

First, a typical example of the configuration of a hermetic compressor according to an embodiment of the present disclosure will be described in detail with reference to FIG. 1. FIG. 1 is a cross-sectional view showing an example of the configuration of a hermetic compressor according to an exemplary embodiment of the present disclosure.

As shown FIG. 1, the hermetic compressor includes a hermetic enclosure 1, an electric element 2, and a compression element 3, the electric element 2 and the compression element 3 being housed in the hermetic enclosure 1. The electric element 2 and the compression element 3 constitute a compressor main body 4. In the hermetic compressor, the hermetic enclosure 1 is filled with a refrigerant gas 6 which is, for example, R600a in the present embodiment, and has a bottom region retaining a lubricating oil 7 which is, for example, mineral oil in the present embodiment. The compressor main body 4 housed in the hermetic enclosure 1 is elastically supported by suspension springs 5.

The hermetic enclosure 1 is made up of an upper hermetic enclosure 1a and a lower hermetic enclosure 1b. The lower hermetic enclosure 1b is provided with spring supports 5a, to which the suspension springs 5 are mounted. The compressor main body 4 is supported by the suspension springs 5. In the present embodiment, the hermetic enclosure 1 (each of the upper hermetic enclosure 1a and the lower hermetic enclosure 1b) is formed, for example, by draw forming of an iron plate.

The hermetic enclosure 1 is equipped with a suction pipe 8 and a discharge pipe 9. One end of the suction pipe 8 communicates with the interior of the hermetic enclosure 1, and the other end of the suction pipe 8 is connected to a low-pressure side (not shown) of a refrigeration unit. One end of the discharge pipe 9 penetrates through the hermetic enclosure 1 and communicates with a discharge muffler (not shown) connected to the compression element 3, and the other end of the discharge pipe 9 is connected to a high-pressure side (not shown) of the refrigeration unit.

The electric element 2 includes at least a rotor 14 and a stator 15. The stator 15 is located radially outside the rotor 14, with a substantially constant gap between the stator 15 and the rotor 14. In the present embodiment, the electric element 2 is driven, for example, by an inverter drive circuit at a plurality of operation frequencies including an operation frequency (e.g., 75 Hz = 4,500 r/min) higher than a commercial power frequency. Thus, the hermetic compressor according to the present embodiment may include an inverter circuit to rotationally drive the electric element 2 at a plurality of operation rotational speeds.

The compression element 3 is a reciprocating-type element driven by the electric element 2 and includes a shaft (crankshaft) 10, a cylinder block 11, a piston 12, and a coupler 13. The shaft 10 includes at least a main shaft, an eccentric shaft which is eccentric with respect to the main shaft, and a flange portion connecting the main shaft and the eccentric shaft to each other. The stator 15 is fixed to a leg portion of the cylinder block 11, and the rotor 14 is fixed to the main shaft of the shaft 10, for example, by shrink-fitting.

As shown in FIG. 1, the eccentric shaft of the shaft 10 is located in an upper region of the hermetic compressor, and the main shaft of the shaft 10 is located in a lower region of the hermetic compressor. The positions of the components of the shaft 10 will be described based on the positional relationship in the vertical direction. For example, the upper end of the eccentric shaft faces toward the upper inner surface of the hermetic enclosure 1 (upper hermetic enclosure 1a), and the lower end of the eccentric shaft is connected to the main shaft.

The upper end of the main shaft is connected to the eccentric shaft, and the lower end of the main shaft faces toward the lower inner surface of the hermetic enclosure 1 (lower hermetic enclosure 1b). The lower end portion of the main shaft is immersed in the lubricating oil 7. Below the shaft 10, i.e., below the main shaft, there is an oil supply mechanism that supplies the lubricating oil 7 from the main shaft's lower end immersed in the lubricating oil 7 to the upper end of the eccentric shaft.

The cylinder block 11 includes a cylinder defining a compression chamber and a main bearing rotatably supporting the main shaft of the shaft 10, the cylinder and the main bearing being integrally formed in a cylinder block 11. The main bearing is shaped as a tube extending in the vertical direction with respect to the cylinder block 11, and the inner circumferential surface of the main bearing is a sliding surface. The main bearing includes a thrust surface and a tubular extension portion.

The thrust surface is a flat portion extending in a direction (transverse direction or horizontal direction) orthogonal to the axial direction of the main shaft, namely, the direction in which the main shaft extends (vertical direction). The tubular extension portion is shaped as a tube extending further upward from the thrust surface. In other words, the tubular extension portion is a portion extending upward from the tubular main body of the main bearing. Thus, like the main body of the main bearing, the tubular extension portion has an inner circumferential surface (sliding surface) facing the outer circumferential surface (sliding surface) of the main shaft. A thrust ball bearing is located on the thrust surface of the main bearing.

In the present embodiment, the cylinder block 11 is made of, for example, cast iron. The compression chamber is a cylindrical bore formed in the cylinder block 11, and the piston 12 is reciprocably inserted into the compression chamber. Thus, the compression chamber is closed by the inserted piston 12. In the present embodiment, the coupler 13 is, for example, cast in aluminum, rotatably supports the eccentric shaft of the shaft 10, and is coupled to the piston 12. Thus, the eccentric shaft of the shaft 10 and the piston 12 are coupled together by the coupler 13.

Furthermore, in the present embodiment, the hermetic compressor includes vibration-damping devices 18 and 19 attached to inner surfaces of the hermetic enclosure 1. In FIG. 1, the upper vibration-damping device 18 is located on the inner surface of the upper hermetic enclosure 1a (the upper inner surface of the hermetic enclosure 1), and the lower vibration-damping device 19 is located on the inner surface of the lower hermetic enclosure 1b (the lower inner surface of the hermetic enclosure 1). These vibration-damping devices 18 and 19 will be described in detail later.

In the present embodiment, the electric element 2 is located in the upper region of the hermetic enclosure 1, and the compression element 3 is located in the lower region of the hermetic enclosure 1. The hermetic compressor according to the present disclosure is not limited to this configuration, and the electric element 2 may be located in the lower region of the hermetic enclosure 1 while the compression element 3 is located in the upper region of the hermetic enclosure 1. In the present embodiment, the electric element 2 is of an inner rotor type, in which the rotor 14 coaxial with the stator 15 is rotatably mounted inside the inner circumference of the stator 15. The electric element 2 is not limited to this configuration and may be of an outer rotor type; that is, the rotor 14 coaxial with the stator 15 may be rotatably mounted around the outer circumference of the stator 15. Although in the present embodiment, as shown in FIG. 1, the compression element 3 is of a reciprocating type, the present disclosure is not limited to this type of compression element 3. For example, the compression element 3 may be of a rotary type.

In the hermetic compressor of the present embodiment, the compression element 3 driven by the electric element 2 compresses the refrigerant gas 6 filling the hermetic enclosure 1. The hermetic compressor according to the present disclosure is not limited to compressing the refrigerant gas 6 and may compress a known fluid other than the refrigerant gas 6.

In the present embodiment, the hermetic compressor configured as described above is coupled, for example, to a known refrigeration unit to form a refrigerant circuit. For example, the refrigerant circuit may include the hermetic compressor, a heat radiator, a decompressor, and a heat absorber which are connected in a loop by pipes.

To bring the hermetic compressor into operation, first, electric power is supplied to the electric element 2 from an unshown commercial power source. Thus, the rotor 14 of the electric element 2 is rotated. The rotation of the rotor 14 causes the shaft 10 to rotate, and the resulting eccentric motion of the eccentric shaft of the shaft 10 is transmitted to the piston 12 via the coupler 13, so that the piston 12 is driven and reciprocated in the compression chamber. The reciprocating motion of the piston 12 effects a given compression process in which the refrigerant gas 6 delivered into the hermetic enclosure 1 is sucked and compressed in the compression chamber.

Specifically, the reciprocating motion of the piston 12 allows the refrigerant gas 6, which is a working fluid in the refrigeration unit, to be sucked into the hermetic enclosure 1 through the suction pipe 8. The refrigerant gas 6 in the hermetic enclosure 1 is sucked into the compression chamber through the suction valve and compressed in the compression chamber. The compressed refrigerant gas 6 is passed through the discharge valve and the discharge muffler and discharged into the high-pressure side of the refrigeration unit through the discharge pipe 9.

In the hermetic compressor, the compression process causes pulsation in the flow of the refrigerant gas 6. This leads to pulsation of the compressor main body 4 elastically supported on the hermetic enclosure 1 by the suspension springs 5. The pulsation of the compressor main body 4 is enhanced by other kinds of vibration. Accordingly, the hermetic enclosure 1 is excited and vibrates. Such vibration of the hermetic enclosure 1 produces noise.

In the present embodiment, as previously mentioned, the vibration-damping devices 18 and 19 are attached to the hermetic enclosure 1 in order to reduce, mitigate, or suppress (damp) the vibration of the hermetic enclosure 1.

The method for driving the hermetic compressor is not limited to the inverter drive described above. For example, the hermetic compressor may be driven by simple on-off control. In the case where the hermetic compressor is inverter-driven by an inverter circuit, the operation frequency is not limited to a particular range. The operation rotational speed of the electric element 2 is not limited to a particular range either. Generally, for example, the operation rotational speed of the electric element 2 may be in the range of 17 to 75 rps (revolutions per second or rotations per second). The operation rotational speed may be up to 80 rps and may be at least 13 rps.

### [Example of configuration of vibration-damping device]

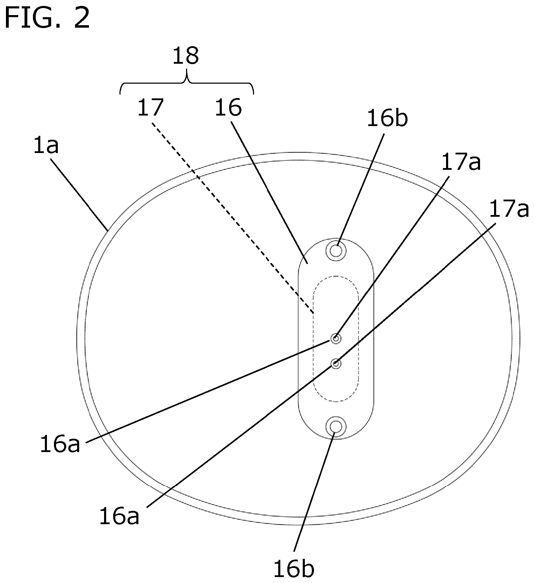

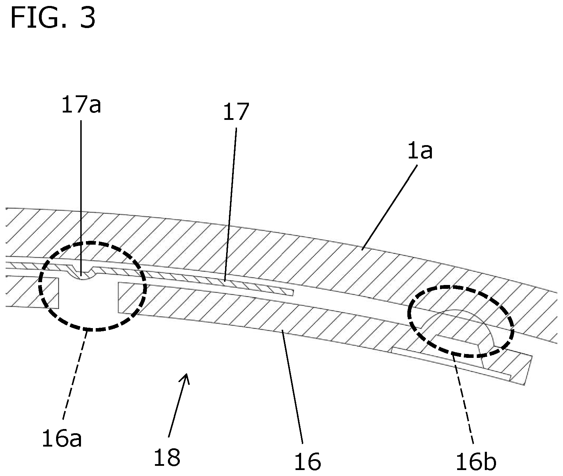

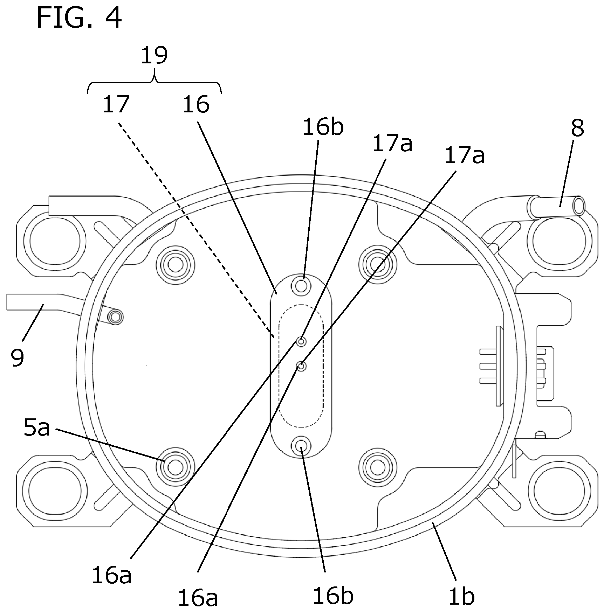

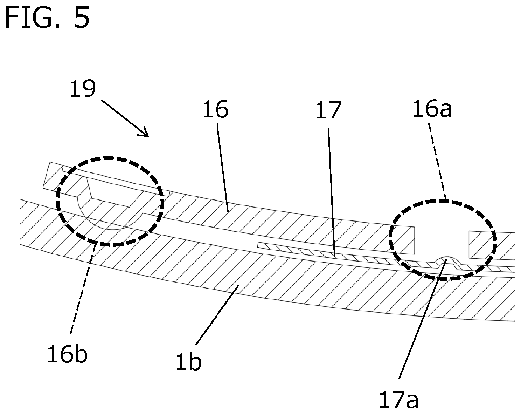

Hereinafter, an example in which a vibration-damping device according to the present disclosure is used in a hermetic compressor will be described in detail with reference to FIGS. 2 to 6. FIG. 2 is a plan view showing the ceiling surface of the hermetic enclosure 1, i.e., the inner surface of the upper hermetic enclosure 1a. FIG. 3 is a partial cross-sectional view showing a typical example of the configuration of a vibration-damping device according to the present disclosure, the vibration-damping device being located on the inner surface (ceiling surface) of the upper hermetic enclosure 1a. FIG. 4 is a plan view showing the bottom surface of the hermetic enclosure 1, i.e., the inner surface of the lower hermetic enclosure 1b. FIG. 5 is a partial cross-sectional view showing a typical example of the configuration of a vibration-damping device according to the present disclosure, the vibration-damping device being located on the inner surface (bottom surface) of the lower hermetic enclosure 1b.

As shown in FIG. 2, an upper vibration-damping device 18 including a holding member 16 and an elastic member 17 is located on the inner surface, i.e., the ceiling surface (top surface), of the upper hermetic enclosure 1a. As described later, the holding member 16 holds the plate-shaped elastic member 17 in contact with the surface of the upper hermetic enclosure 1a (structure). To this end, in the example of FIG. 2, the holding member 16 is shaped as a plate that can cover the entire elastic member 17. In FIG. 2, the holding member 16 is shown by a solid line, and the elastic member 17 covered by the holding member 16 is shown by a dotted line.

In the present embodiment, the holding member 16 includes two positioning holes 16a and two fixing portions 16b. The holding member 16 is shaped as a plate member having a longitudinal direction. The fixing portions 16b are located, respectively, at both ends of the holding member 16 in the longitudinal direction, and the two positioning holes 16a are located around the longitudinal center of the holding member 16 and aligned in the longitudinal direction.

Similarly to the holding member 16, the elastic member 17 is shaped as a plate member having a longitudinal direction. In the present embodiment, the elastic member 17, the entirety of which is covered by the holding member 16, extends over a smaller area than the holding member 16. Around the longitudinal center of the elastic member 17 there are two positioning protrusions 17a, which are aligned in the longitudinal direction. The locations of the positioning protrusions 17a of the elastic member 17 coincide with the locations of the positioning holes 16a of the holding member 16.

As shown in FIG. 3, the elastic member 17, which is a plate member, has one surface (first surface) in contact with the upper hermetic enclosure 1a. The other surface (second surface opposite to the first surface) of the elastic member 17 is supported or biased by the holding member 16, and the first surface of the elastic member 17 is held in contact with the upper hermetic enclosure 1a. The first surface of the elastic member 17 is defined as a "contact surface" which is placed in contact with the surface of the upper hermetic enclosure 1a, i.e., the structure that vibrates, while the second surface of the elastic member 17, i.e., the surface not in contact with the upper hermetic enclosure 1a, is defined as a "non-contact surface" which is not placed in contact with the structure. The positioning protrusions 17a are located on the non-contact surface (second surface) of the elastic member 17.

Unlike the elastic member 17 having elasticity, the holding member 16 has stiffness in order to hold the elastic member 17 in such a manner as to keep the contact surface (first surface) of the elastic member 17 in contact with the upper hermetic enclosure 1a (structure).

In the present embodiment, the structure that vibrates is the hermetic enclosure 1. As shown in FIG. 1 or 3, the ceiling surface of the hermetic enclosure 1 or upper hermetic enclosure 1a (the surface of the structure) is curved and convex upward. Thus, the holding member 16 is also curved along the curved ceiling surface.

The holding member 16, which is a plate member, has one surface (first surface) that contacts the elastic member 17 to hold the elastic member 17 in contact with the upper hermetic enclosure 1a (structure). The first surface of the holding member 16 is defined as a "holding surface" for holding the elastic member 17, and the second surface of the holding member 16, which is opposite to the holding surface, is defined as a "non-holding surface" that does not hold the elastic member 17. The fixing portions 16b located at both ends of the holding member 16 are portions for fixing the holding member 16 to the upper hermetic enclosure 1a. In the present embodiment, the fixing portions 16b are formed as protrusions on the holding surface.

To hold the elastic member 17 between the holding member 16 and the surface of the upper hermetic enclosure 1a (structure), the holding member 16 is fixed in part to the upper hermetic enclosure 1a (structure) at the fixing portions 16b, with a given gap between the upper hermetic enclosure 1a (structure) and the holding member 16. In the present embodiment, the fixing portions 16b are welded to the inner surface of the upper hermetic enclosure 1a.

The positioning holes 16a of the holding member 16 are located to receive the positioning protrusions 17a of the elastic member 17. Thus, the positioning protrusions 17a enter the positioning holes 16a, and the elastic member 17 is positioned relative to the holding member 16. While the holding member 16 is fixed to the upper hermetic enclosure 1a, the elastic member 17 is merely positioned by the holding member 16. Thus, the positioned elastic member 17 can be in contact with the upper hermetic enclosure 1a without being fixed to the upper hermetic enclosure 1a.

As shown in FIG. 3, in the upper vibration-damping device 18 according to the present embodiment, the elastic member 17 shaped as a flat plate (plate member) is held between the upper hermetic enclosure 1a (structure) and the holding member 16. The holding member 16 has the holding surface with a curvature approximately equal to that of the upper hermetic enclosure 1a and is fixed to the upper hermetic enclosure 1a in such a manner that a gap of a given width is formed between the holding member 16 and the inner surface (ceiling surface) of the upper hermetic enclosure 1a.

As shown in FIG. 1, the hermetic compressor according to the present embodiment includes the upper vibration-damping device 18 on the ceiling surface of the hermetic enclosure 1 (the inner surface of the upper hermetic enclosure 1a) and further includes a lower vibration-damping device 19 on the bottom surface of the hermetic enclosure 1 (the inner surface of the lower hermetic enclosure 1b).

As shown in FIG. 4, the lower vibration-damping device 19 including a holding member 16 and an elastic member 17 is located on the inner surface, i.e., the bottom surface, of the lower hermetic enclosure 1b. In the present embodiment, the lower vibration-damping device 19 has the same configuration as the upper vibration-damping device 18. In FIG. 4, the holding member 16 is shown by a solid line, and the elastic member 17 covered by the holding member 16 is shown by a dotted line.

The lower hermetic enclosure 1b is fitted with the suspension springs 5 which support the compressor main body 4. Thus, for example, as shown in FIG. 4, there are four spring supports 5a located at the four corners of a square region on which the compressor main body 4 is mounted. The lower vibration-damping device 19 is attached in the square region so as not to overlap the spring supports 5a. As shown in FIG. 1, the lower hermetic enclosure 1b retains the lubricating oil 7. Additionally, as shown in FIG. 4, the lower hermetic enclosure 1b is provided with the suction pipe 8 and the discharge pipe 9.

In the lower vibration-damping device 19, as in the upper vibration-damping device 18, the holding member 16 includes two positioning holes 16a and two fixing portions 16b. The holding member 16 is shaped as a plate member having a longitudinal direction. The fixing portions 16b are located, respectively, at both ends of the holding member 16 in the longitudinal direction, and the two positioning holes 16a are located around the longitudinal center of the holding member 16 and aligned in the longitudinal direction.

Similarly to the holding member 16, the elastic member 17 is shaped as a plate member having a longitudinal direction. In the present embodiment, the elastic member 17, the entirety of which is covered by the holding member 16, extends over a smaller area than the holding member 16. Around the longitudinal center of the elastic member 17 there are two positioning protrusions 17a, which are aligned in the longitudinal direction. The locations of the positioning protrusions 17a of the elastic member 17 coincide with the locations of the positioning holes 16a of the holding member 16.

In the lower vibration-damping device 19, as shown in FIG. 5, the contact surface (first surface) of the elastic member 17 is placed in contact with the lower hermetic enclosure 1b. The non-contact surface (second surface) of the elastic member 17 is supported or biased by the holding member 16, and the contact surface of the elastic member 17 is held in contact with the lower hermetic enclosure 1b. The positioning protrusions 17a are located on the non-contact surface of the elastic member 17.

In the lower vibration-damping device 19, the holding member 16 holds the elastic member 17 by the holding surface (first surface) in such a manner as to keep the contact surface of the elastic member 17 in contact with the lower hermetic enclosure 1b (structure). As shown in FIG. 1 or 5, the bottom surface of the hermetic enclosure 1 or lower hermetic enclosure 1b (the surface of the structure) is curved and convex downward. Thus, the holding member 16 is also curved along the curved bottom surface. The fixing portions 16b located at both ends of the holding member 16 are portions for fixing the holding member 16 to the lower hermetic enclosure 1b. As in the upper vibration-damping device 18, the fixing portions 16b are formed as protrusions on the holding surface (first surface).

To hold the elastic member 17 between the holding member 16 and the surface of the lower hermetic enclosure 1b (structure), the holding member 16 is fixed in part to the lower hermetic enclosure 1b (structure) at the fixing portions 16b, with a given gap between the lower hermetic enclosure 1b (structure) and the holding member 16. In the present embodiment, the fixing portions 16b are welded to the inner surface of the lower hermetic enclosure 1b, similarly to those of the upper vibration-damping device 18.

Also in the lower vibration-damping device 19, the positioning holes 16a of the holding member 16 are located to receive the positioning protrusions 17a of the elastic member 17. Thus, the positioning protrusions 17a enter the positioning holes 16a, and the elastic member 17 is positioned relative to the holding member 16. While the holding member 16 is fixed to the upper hermetic enclosure 1a, the elastic member 17 is merely positioned by the holding member 16. Thus, the positioned elastic member 17 can be in contact with the lower hermetic enclosure 1b without being fixed to the lower hermetic enclosure 1b.

As shown in FIG. 5, in the lower vibration-damping device 19 according to the present embodiment, the elastic member 17 shaped as a flat plate (plate member) is held between the lower hermetic enclosure 1b (structure) and the holding member 16. The holding member 16 has the holding surface with a curvature approximately equal to that of the lower hermetic enclosure 1b and is fixed to the lower hermetic enclosure 1b in such a manner that a gap of a given width is formed between the holding member 16 and the inner surface (bottom surface) of the lower hermetic enclosure 1b.

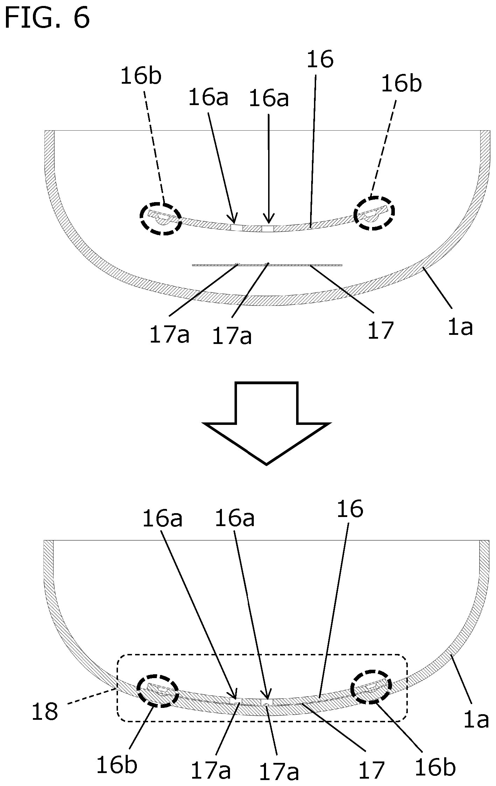

As described above, in the present embodiment, the fixing portions 16b of both the upper vibration-damping device 18 and the lower vibration-damping device 19 are fixed to the hermetic enclosure 1 (structure) by being welded to the inner surface of the hermetic enclosure 1 (the fixing portions 16b of the upper vibration-damping device 18 are welded to the inner surface (ceiling surface) of the upper hermetic enclosure 1a while those of the lower vibration-damping device 19 are welded to the inner surface (bottom surface) of the lower hermetic enclosure 1b). In this way, the vibration-damping devices 18 and 19 are attached to the hermetic enclosure 1. The attachment of the upper vibration-damping device 18 will be described as an example with reference to FIG. 6.

As shown in the upper half of FIG. 6, the elastic member 17 is placed between the inner surface, i.e., the ceiling surface (lower side of the figure), of the upper hermetic enclosure 1a and the holding member 16. As previously described, the holding member 16 is curved with a curvature approximately equal to that of the inner surface of the upper hermetic enclosure 1a. The elastic member 17 is a plate member having elasticity and takes a non-curved, flat shape when the elastic member 17 is not held by the holding member 16 (when no external force acts on the elastic member 17).

As previously described, the holding member 16 includes two positioning holes 16a located around the longitudinal center of the holding member 16 and aligned in the longitudinal direction. As previously described, the elastic member 17 located between the holding member 16 and the inner surface of the upper hermetic enclosure 1a includes two positioning protrusions 17a located around the longitudinal center of the elastic member 17 and aligned in the longitudinal direction. The positioning protrusions 17a are located on the non-contact surface of the elastic member 17; that is, the positioning protrusions 17a project toward the holding surface of the holding member 16. Before the holding member 16 is fixed to the upper hermetic enclosure 1a, the positioning holes 16a of the holding member 16 and the positioning protrusions 17a of the elastic member 17 are brought into alignment.

At both ends of the holding member 16 there are the fixing portions 16b formed as protrusions on the holding surface. With the holding member 16 in contact with the upper hermetic enclosure 1a, a gap having a given width about as large as the thickness of the elastic member 17 (a given gap) is provided between the upper hermetic enclosure 1a and the holding surface of the holding member 16. Since the inner surface of the upper hermetic enclosure 1a and the holding member 16 are curved with approximately equal curvatures, the given gap between the inner surface of the upper hermetic enclosure 1a and the holding member 16 is a curved space. The elastic member 17, which is held between the inner surface of the upper hermetic enclosure 1a and the holding member 16, is flat when no external force acts on the elastic member 17 but is elastically bent once an external force acts on the elastic member 17.

As shown in the lower half of FIG. 6, the elastic member 17 is placed between the upper hermetic enclosure 1a and the holding member 16, and an electric current is applied to the fixing portions 16b of the holding member 16 whose non-holding surface is pressed toward the upper hermetic enclosure 1a (toward the inner surface or ceiling surface of the upper hermetic enclosure 1a). This effects melting of the fixing portions 16b, leading to the holding member 16 being fixed to the inner surface of the upper hermetic enclosure 1a. The holding member 16 holds the elastic member 17 while biasing the elastic member 17 toward the inner surface of the upper hermetic enclosure 1a (the surface of the structure).

In the fixing process, as previously described, each of the two positioning protrusions 17a enters a corresponding one of the two positioning holes 16a. Thus, the elastic member 17 is positioned by the holding member 16 relative to the inner surface of the upper hermetic enclosure 1a. This allows the elastic member 17 to be in stable contact with the inner surface of the upper hermetic enclosure 1a in a state where the elastic member 17 is curved along, and positioned relative to, the inner surface of the upper hermetic enclosure 1a. In the manner described above, the upper vibration-damping device 18 can be attached to the inner surface (ceiling surface) of the upper hermetic enclosure 1a.

The attachment of the lower vibration-damping device 19 can also be accomplished in the manner as described above and will therefore not be described in detail. As is clear from FIG. 1, the lubricating oil 7 is retained on the inner surface (bottom surface) of the lower hermetic enclosure 1b to which the lower vibration-damping device 19 is attached. Thus, the entire lower vibration-damping device 19 is immersed in the lubricating oil 7.

### [Vibration-damping action of vibration-damping device]

The following will describe the mechanism by which the vibration-damping devices 18 and 19 configured as described above reduce, mitigate, or suppress (damp) vibration occurring during operation of the hermetic compressor configured as described above and thereby reduce or suppress noise during operation of the hermetic compressor. The description will be given with reference to FIGS. 1 to 5, FIG. 12, and FIGS. 13A and 13B.

As previously described, the compression process performed by the compressor main body 4 of the hermetic compressor causes pulsation in the flow of the refrigerant gas 6. This leads to pulsation of the compressor main body 4 elastically supported on the hermetic enclosure 1 by the suspension springs 5. The pulsation of the compressor main body 4 is enhanced by other kinds of vibration. Accordingly, the pulsation is transmitted to the hermetic enclosure 1 via the refrigerant gas 6 or the lubricating oil 7, and the hermetic enclosure 1 is excited and vibrates. Such vibration of the hermetic enclosure 1 produces noise.

By way of example, attention is drawn to the upper hermetic enclosure 1a and the upper vibration-damping device 18 shown in FIG. 2 or 3. When the hermetic enclosure 1 vibrates, the vibration of the upper hermetic enclosure 1a causes the elastic member 17 to undergo a slight sliding displacement in the gap (in the given gap) between the upper hermetic enclosure 1a and the holding member 16. This is not only because the elastic member 17 is not fixed to the upper hermetic enclosure 1a but because the elastic member 17 is merely positioned relative to, but not fixed to, the holding member 16.

By the slight sliding displacement, the elastic member 17 converts the vibration energy of the upper hermetic enclosure 1a to thermal energy. This can reduce, mitigate, or suppress the vibration of the upper hermetic enclosure 1a and effectively reduce or suppress noise arising from the vibration of the upper hermetic enclosure 1a. The same action is effected for the lower hermetic enclosure 1b and the lower vibration-damping device 19 shown in FIG. 4 or 5.

Furthermore, the load imposed on the hermetic enclosure 1 (upper hermetic enclosure 1a or lower hermetic enclosure 1b) when the elastic member 17 undergoes a slight sliding displacement depends on the elastic force of the elastic member 17. Specifically, for example, as described in Patent Literature 1, the amount of energy damping between the inner surface of the hermetic enclosure 1 and that portion of the elastic member 17 which is in contact with the inner surface of the hermetic enclosure 1 is generally given by the following equation. $ΔS = 4 \int Fδdx$

In the above equation, ΔS is the amount of energy damping, F is the contact force of the elastic member 17, δ is the relative displacement of the contact portion of the elastic member 17, and dx is the extent of contact of the elastic member 17.

In the present disclosure, the elastic member 17, which is a plate member, is in contact with the inner surface of the upper hermetic enclosure 1a over the entirety of the elastic member 17. Thus, the contact force F of the elastic member 17 depends on the elastic force of the elastic member 17, and the extent of contact dx of the elastic member 17 depends on the area of the elastic member 17. The contact force that the elastic member 17 exerts on the hermetic enclosure 1 or the extent of contact over which the elastic member 17 is in contact with the hermetic enclosure 1 can be more easily adjusted than in conventional vibration-damping techniques. As a result, the vibration of the hermetic enclosure 1 can be damped more reliably to achieve a greater reduction in vibration-induced noise than ever before.

In the present embodiment, the object (structure) that vibrates is the hermetic enclosure 1 of the hermetic compressor. As is clear from FIG. 1, the hermetic enclosure 1 can as a whole be considered substantially spherical. Thus, for example, it is envisaged that the surface of the upper hermetic enclosure 1a to which the upper vibration-damping device 18 is fixed undergoes not only a vibration in a direction orthogonal to the surface (this vibration will be hereinafter referred to as "primary vibration") but also relatively weak vibrations in directions crossing the direction in which the primary vibration occurs (these relatively weak vibrations will be referred to as "secondary vibrations"). That is, the hermetic enclosure 1 is inferred to vibrate three-dimensionally.

The vibration-damping devices 18 and 19 according to the present embodiment can effect slight sliding displacements of the elastic members 17 in response to the three-dimensional vibration of the hermetic enclosure 1, thereby exhibiting a satisfactory vibration-damping effect on the three-dimensional vibration of the hermetic enclosure 1. Thus, the vibration-damping devices 18 and 19 can very effectively reduce noise arising from the vibration of the hermetic enclosure 1.

As previously described, the compression element 3 of the hermetic compressor according to the present embodiment is of a reciprocating type. In this configuration, the vibration of the hermetic enclosure 1 could produce specific harmonic noise having a frequency in a resonance frequency band (e.g., 2 to 8 kHz). The vibration-damping devices 18 and 19 according to the present embodiment can, by virtue of the slight sliding displacements of the elastic members 17, successfully reduce the noise specific to the reciprocating-type compression element and having a frequency in the resonance frequency band.

As previously described, the hermetic compressor according to the present embodiment may include an inverter circuit to inverter-drive the compression element 3 at a plurality of operation frequencies. In the case of inverter-driving the compression element 3, the compression mechanism (which, in the present embodiment, is of a reciprocating type including the piston 12 and the bore) is operated at varying speeds, and this entails variations in the frequency at which the hermetic enclosure 1 is vibrated. In response to the vibration at varying frequencies, the vibration-damping devices 18 and 19 can exhibit a satisfactory friction damping effect and thus achieve an effective vibration-damping action, successfully reducing noise.

As previously described, techniques for achieving a vibration-damping action by attaching an elastic member to a hermetic enclosure are conventionally known.

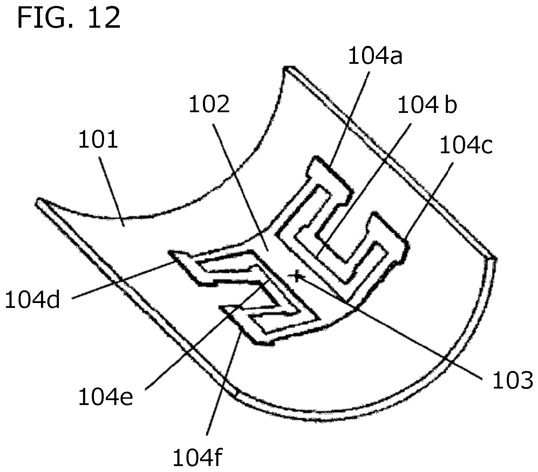

In Patent Literature 1 described above, as shown in FIG. 12, a vibration-damping plate 102 as an elastic member is fixed at a fixed portion 103 to an inner surface of a hermetic enclosure 101 of a hermetic compressor. This fixing is accomplished, for example, by spot welding. The vibration-damping plate 102 includes a plurality of contact portions 104a, 104b, 104c, 104d, 104e, and 104f, which are in elastic contact with the hermetic enclosure 101. In such an elastic member, the plurality of contact portions 104a to 104f are in contact with different sites of the surface of the hermetic enclosure 101 (structure). Patent Literature 1 alleges that such a vibration-damping plate 102 can be in stable contact with the inner surface of the hermetic enclosure 101 (the surface of the structure) and thus can achieve a satisfactory vibration-damping and noise-reducing effect.

However, as pointed out in Patent Literature 2, when the vibration-damping plate 102 of Patent Literature 1 is fixed by welding at the fixed portion 103 of the hermetic enclosure 101, the contact portions 104a to 104f of the vibration-damping plate 102 could plastically deform while coming into elastic contact with the hermetic enclosure 101. The plastic deformation could cause variations in the contact locations or contact loads of the contact portions 104a to 104f. This could lead to variations in the contact friction damping effect of the vibration-damping plate 102, resulting in a failure to achieve a satisfactory vibration-damping action and in a small noise-reducing effect.

To address this problem, Patent Literature 2 described above employs a vibration-damping member 202 which, as shown in FIGS. 13A and 13B, includes a fixed portion 204 fixed to a hermetic enclosure 201, a free end 203 opposite from the fixed portion 204, and a connection portion 206 connecting the fixed portion 204 to the free end 203. In the vibration-damping member 202, a part other than the free end 203 includes a plurality of contact portions 205a to 205d that are in elastic contact with the surface of the hermetic enclosure 201.

The vibration-damping member 202 is fixed at the fixed portion 204 to the hermetic enclosure 201 (structure), and the free end 203 can vibrate. Thus, the vibration-damping member 202 can have a natural frequency substantially equal to the natural frequency of the hermetic enclosure 201 (structure). As a result, the vibration-damping member 202 can exhibit a dynamic vibration absorber effect. Furthermore, the contact portions 205a to 205d opposite from the free end 203 are in contact with the hermetic enclosure 201 (structure) and have an elastic force. This allows the vibration-damping member 202 to exhibit a contact friction damping effect at the contact portions 205a to 205d.

By virtue of the dynamic vibration absorber effect and the contact friction damping effect, the vibration-damping member 202 can suppress the vibration of the hermetic enclosure 201 (structure). As a result, the vibration-damping member 202 can reduce noise produced by the hermetic compressor.

However, as previously described, the vibration-damping member 202 is complicated in configuration as it includes the free end 203 and the plurality of contact portions 205a to 205d. Although the vibration-damping member 202 can easily have a natural frequency substantially equal to that of the structure that vibrates (hermetic enclosure 201), the complicated configuration of the vibration-damping member 202 limits the flexibility in adapting to changes in natural frequency. Additionally, while the vibration-damping member 202 can be easily specialized for a particular structure, the vibration-damping member 202 is difficult to use in other applications.

In the vibration-damping device 18 or 19 according to the present disclosure, the holding member 16 holds the plate-shaped elastic member 17 in contact with the inner surface of the hermetic enclosure 1. In this configuration, the elastic member 17 is in contact with the hermetic enclosure 1 without being fixed to the inner surface of the hermetic enclosure 1. Thus, the elastic member 17 is kept in contact with the hermetic enclosure 1 without being fixed to the hermetic enclosure 1. As a result, in the event of vibration of the hermetic enclosure 1, the elastic member 17 exhibits an elastic action that successfully reduces, mitigates, or suppresses the vibration.

Additionally, the elastic member 17 is in contact with the inner surface of the hermetic enclosure 1 by being held between the inner surface of the hermetic enclosure 1 and the holding member 16 fixed in part to the inner surface of the hermetic enclosure 1. Thus, there is no need to employ any complicated configuration, and a simple configuration can be achieved.

In particular, the configuration of the present disclosure differs from conventional configurations such as the configuration of the vibration-damping plate 102 disclosed in Patent Literature 1 in that the elastic member 17 is in contact with the hermetic enclosure 1 merely by being held by the holding member 16 and therefore has low or no risk of load variations caused by plastic deformation. Thus, the vibration-damping devices 18 and 19 according to the present disclosure can exhibit a satisfactory vibration-damping action and achieve a satisfactory noise-reducing effect.

Furthermore, the quality of contact of the elastic member 17 with the inner surface of the hermetic enclosure 1 depends on the elasticity of the elastic member 17, and the extent of contact over which the elastic member 17 is in contact with the inner surface of the hermetic enclosure 1 depends on the area of the elastic member 17. Since the elastic member 17 is a plate member having elasticity, the quality or extent of contact of the elastic member 17 can be easily adjusted. This allows the vibration-damping devices 18 and 19 to easily achieve vibration-damping performance suitable for the vibration which occurs in the hermetic enclosure 1 and to be applicable not only in the filed of hermetic compressors but also in other fields.

### [Variants of vibration-damping device]

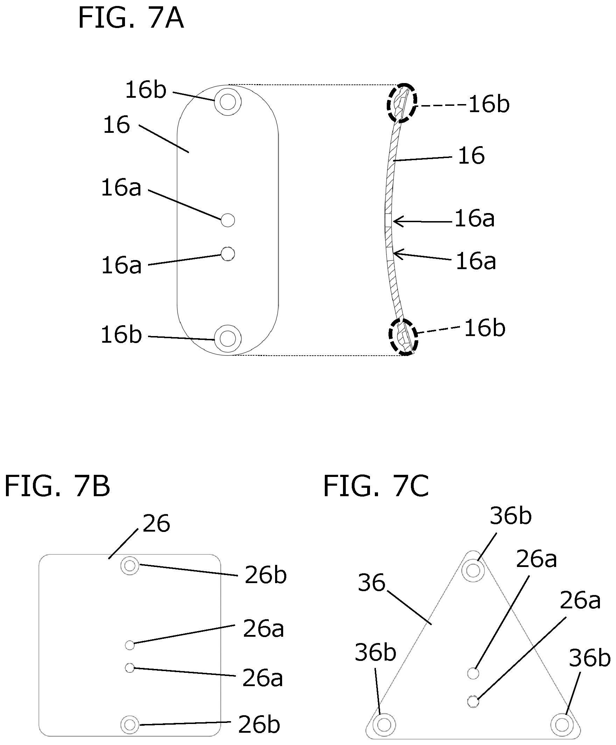

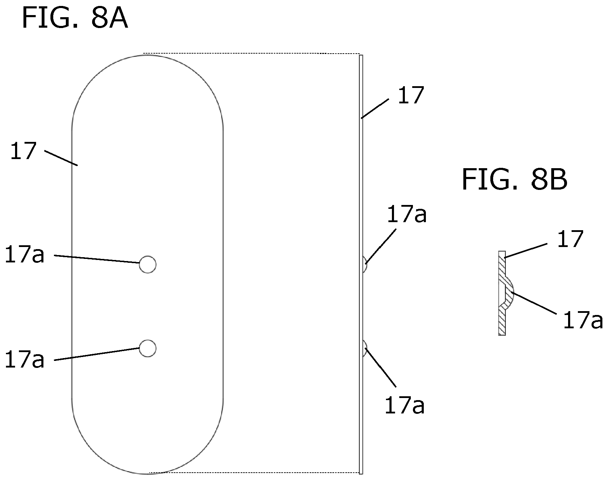

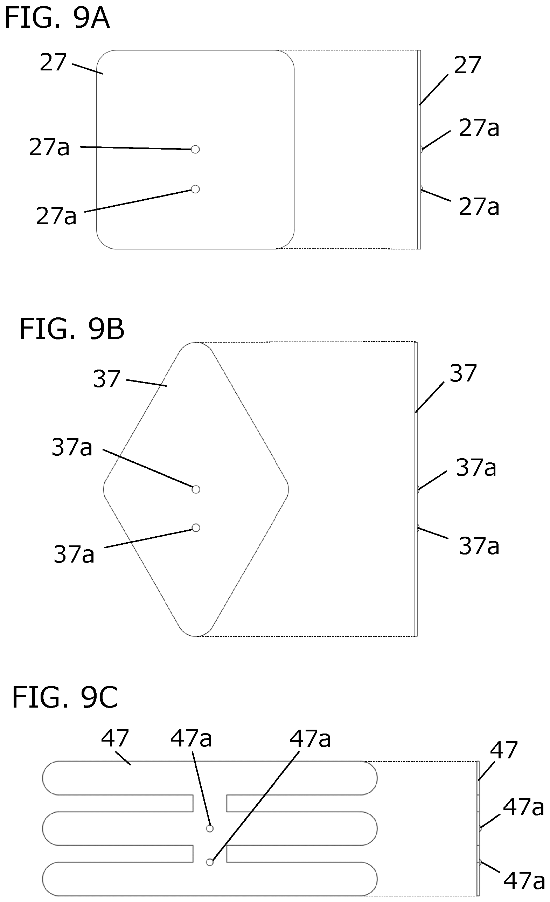

Hereinafter, exemplary variants of the vibration-damping devices 18 and 19 according to the present disclosure will be described in detail. FIGS. 7A to 7C show examples of the holding members used in the vibration-damping devices 18 and 19, FIGS. 8A and 8B show examples of the elastic members used in the vibration-damping devices 18 and 19, and FIGS. 9A to 9C show other examples of the elastic members.

The holding member 16 shown in FIG. 7A is a holding member included in the vibration-damping device 18 or 19 described above. As previously described, the holding member 16 is shaped as a plate member having a longitudinal direction. The holding member 16 includes two positioning holes 16a located around the longitudinal center of the holding member 16 and aligned in the longitudinal direction and further includes two fixing portions 16b located, respectively, at both ends of the holding member 16 in the longitudinal direction. As is clear from the cross-sectional view of FIG. 7A, the holding member 16 is curved with a curvature approximately equal to that of the inner surface of the hermetic enclosure 1.

A holding member 26 shown in FIG. 7B has basically the same configuration as the holding member 16 but is shaped as a generally square plate member unlike the holding member 16 which is a plate member having a longitudinal direction. Around the center of the holding member 26 there are two positioning holes 26a aligned in the vertical direction as viewed in the figure, and two fixing portions 26b are located at opposite edges of the holding member 26 in the direction in which the positioning holes 26a are aligned, and face each other across the positioning holes 26a. Thus, the first fixing portion 26b, the two positioning holes 26a, and the second fixing portion 26b are arranged in a line in this order.

A holding member 36 shown in FIG. 7C is a plate member similarly to the holding member 16 or 26 but is generally triangular. Around the center of gravity of the equilateral-triangular shape of the holding member 36 there are two positioning holes 36a aligned in the vertical direction as viewed in the figure. The direction in which the positioning holes 36a are aligned corresponds to the direction of the perpendicular bisector of the equilateral triangle. The holding member 36 includes fixing portions 36b at locations corresponding to the vertex angle and two base angles of the equilateral triangle. Thus, unlike the holding member 16 or 26, the holding member 36 includes a total of three fixing portions 36b. The holding member 16, 26, or 36 is not limited to including two fixing portions 16b, 26b, or 36b but may include three or more fixing portions 16b, 26b, or 36b.

The elastic member 17 shown in FIG. 8A is an elastic member included in the vibration-damping device 18 or 19 described above. As previously described, the elastic member 17 is shaped as a plate member having a longitudinal direction similarly to the holding member 16 shown in FIG. 7A. The elastic member 17 includes two positioning protrusions 17a located around the longitudinal center of the elastic member 17 and aligned in the longitudinal direction. As previously described, the locations of the positioning protrusions 17a of the elastic member 17 coincide with the locations of the positioning holes 16a of the holding member 16. As previously described, the elastic member 17, which has elasticity, takes a non-curved, flat shape as long as no external force acts on the elastic member 17.

As previously described, the positioning protrusions 17a are on the non-contact surface of the elastic member 17 which does not contact the inner surface of the hermetic enclosure 1 but contacts the holding surface of the holding member 16. The positioning protrusions 17a are not limited to having particular features. For example, as shown in FIG. 8B, each of the positioning protrusions 17a may be formed by raising a part of the plate member in a direction from the contact surface (left surface in the figure) toward the non-contact surface (right surface in the figure). Such an elastic member 17 can be in contact with the surface of a structure that vibrates such as the hermetic enclosure 1 over a lager contact area than a conventional elastic vibration-damping plate (see Patent Literature 1, for example). This allows for a further reduction in the resonance level of the hermetic enclosure 1 (structure).

The configuration of the elastic member 17 is not limited to the configuration shown in FIG. 8A but may be any of the configurations shown in FIGS. 9A to 9C. The elastic member 17 is in contact with the structure that vibrates (the hermetic enclosure 1 in the present embodiment) by being supported or biased by the holding member 16. Thus, in the present disclosure, the elastic member 17 may be any two-dimensionally extending plate member such as a plate spring. That is, the elastic member 17 is not limited to having a strip shape (or rectangular shape) as shown in FIG. 8A which has a longitudinal direction.

For example, an elastic member 27 shown in FIG. 9 A is shaped as a generally square plate member similarly to the holding member 26 shown in FIG. 7B. Around the center of the elastic member 27 there are two positioning protrusions 27a aligned in the vertical direction as viewed in the figure. The positioning protrusions 27a are located to enter the positioning holes 26a of the holding member 26. Similarly to the elastic member 17, the elastic member 27 takes a non-curved, flat shape as long as no external force acts on the elastic member 27.

An elastic member 37 shown in FIG. 9B is a generally rhombic plate member and has a longitudinal direction which is the vertical direction as viewed in the figure. Similarly to the elastic member 17, the elastic member 37 includes two positioning protrusions 37a located around the longitudinal center of the elastic member 37 and aligned in the longitudinal direction. Similarly to the elastic member 17 or 27, the elastic member 37 takes a non-curved, flat shape as long as no external force acts on the elastic member 37.

An elastic member 47 shown in FIG. 9C, where the vertical direction is defined as a first direction, includes two positioning protrusions 47a located around the center of the elastic member 47 in the first direction and aligned in the first direction. The horizontal direction as viewed in the figure, i.e., the direction orthogonal to the first direction, is defined as a second direction; then, the elastic member 47 includes portions extending lengthwise in the second direction. In the example of FIG. 9C, there are elongate plate-shaped portions originating at both ends of the portion extending in the first direction, and the two elongate plate-shaped portions originating at each end of the portion extending in the first direction extend away from each other in the second direction. Two other elongate plate-shaped portions originate at the center of the portion extending in the first direction and extend away from each other in the second direction.

In other words, the elastic member 47 can be described as a plate member that extends longitudinally in the second direction, that includes two positioning protrusions 47a located around the center of the plate member in the second direction and aligned in the direction (first direction) orthogonal to the second direction, and that further includes four slits the two of which extend from one end of the plate member toward the center of the plate member in the second direction and the other two of which extend from the other end of the plate member toward the center of the plate member in the second direction. Similarly to the elastic member 17, 27, or 37, the elastic member 47 takes a non-curved, flat shape as long as no external force acts on the elastic member 47.

All of the elastic member 17 shown in FIG. 8A (or FIGS. 2 and 4), the elastic member 27 shown in FIG. 9A, the elastic member 37 shown in FIG. 9B, and the elastic member 47 shown in FIG. 9C are two-dimensionally extending plate members. Thus, the entire surface of each elastic member can be reliably brought into contact with the structure (hermetic enclosure 1) to ensure a large contact area between the elastic member 17 and the structure and achieve a satisfactory vibration-damping action.

Additionally, the elastic member 27 shown in FIG. 9A, the elastic member 37 shown in FIG. 9B, and the elastic member 47 shown in FIG. 9C extend over a larger area than the elastic member 17 shown in FIG. 8A. Thus, the elastic member 27, 37, or 47 can be in contact with the hermetic enclosure 1 (structure) over a larger area than the elastic member 17. Thus, the elastic members 27 to 47 can exhibit a damping effect for more frequencies of vibration than the elastic member 17.

In particular, the rhombic elastic member 37 shown in FIG. 9B can be described as including two portions protruding laterally in opposite directions, unlike the elastic member 17 having merely a longitudinal direction. The elastic member 37 having such a shape can more easily undergo a three-dimensional motion than the elastic member 17. In addition, unlike the elastic member 17, the elastic member 47 shown in FIG. 9C can be described as including as many as six portions the three of which extend laterally in one direction and the other three of which extend laterally in the opposite direction. The elastic member 47 having such a shape can more easily undergo a three-dimensional motion than the elastic member 27 or 37.

As described above, the elastic members 17 to 47 are not limited to having particular shapes and can each be a plate member shaped as appropriate to have a suitable contact area depending on factors such as the shape of the inner surface of the structure that vibrates (the hermetic enclosure 1 in the present embodiment) or the magnitude of the vibration (or noise). The extent of contact over which the elastic members 17 to 47 are in contact with the surface of the structure depends on the respective areas of the elastic members 17 to 47. Thus, the extent of contact over which the elastic members 17 to 47 are in contact with the surface of the structure can be easily adjusted by changing the shapes of the elastic members 17 to 47 or partially adjusting the dimensions of the elastic members 17 to 47. This makes it easier to achieve vibration-damping performance suitable for the vibration which occurs in the structure.

The elastic member 17 (or any of the elastic members 27 to 47) is not limited to being made of a particular material but is generally made of a metal material and quench-hardened. In this case, the elastic member 17 can be easily produced and the elasticity of the elastic member 17 can be adjusted by quench hardening. The metal material is not limited to a particular type, and typical examples of the metal material include various kinds of steel materials (such as stainless steel), phosphor bronze, beryllium copper, and titanium spring materials. Examples of more preferred materials include stainless steel and spring steel. In the examples described later, an SK material (carbon tool steel material) is used.

The surface of the elastic member 17 may be subjected to oxidation treatment. When the elastic member 17 is made of a metal material, the oxidation treatment can form an oxidized coating on the surface of the elastic member 17. The oxidized coating can protect the surface of the elastic member 17, thus enhancing the stability of the elastic member 17. In addition, for example, when projection welding is used to attach the vibration-damping device 18 or 19 to the hermetic enclosure 1, the oxidized coating prevents any electric current from flowing through the elastic member 17 during the projection welding. This allows for avoidance or prevention of fusion between the hermetic enclosure 1 and the elastic member 17.

The elastic member 17 is not limited to having a particular thickness, and the thickness of the elastic member 17 can be set as appropriate depending on various factors. In general, the thickness of the elastic member 17 is in the range of 0.1 to 1 mm. In this case, the elastic member 17 can conform well to the inner surface of the hermetic enclosure 1, thus exhibiting an enhanced damping effect. A suitable thickness of the elastic member 17 depends on the material of the elastic member 17. When the elastic member 17 is made of a metal material, the elasticity of the elastic member 17 can be adjusted by adjusting the thickness of the elastic member 17 as appropriate within the range mentioned above.

The elastic member 17 is not limited to having a particular elastic modulus, and the elastic modulus of the elastic member 17 can be set as appropriate depending on various factors. In general, the Young's modulus of the elastic member 17 is in the range of 100,000 to 300,000 N/mm² and more preferably in the range of 150,000 to 250,000 N/mm². A suitable value of the Young's modulus of the elastic member 17 depends on factors such as the type, configuration, or material of the structure that vibrates. For example, when the structure is the hermetic enclosure 1, the elastic member 17 having a Young's modulus within the range mentioned above can very successfully damp the vibration (or noise) of the hermetic enclosure 1.

As previously described, while the extent of contact over which the elastic member 17 is in contact with the surface of the structure depends on the area of the elastic member 17, the quality of contact of the elastic member 17 with the surface of the structure depends on the elasticity of the elastic member 17. The elasticity (Young's modulus) of the elastic member 17 can be set as appropriate depending on various factors such as the type of the material of the elastic member 17, the thickness of the elastic member 17, and whether the elastic member 17 is quench-hardened. Like the extent of contact of the elastic member 17, the quality of contact of the elastic member 17 can be easily adjusted by adjusting the elasticity of the elastic member 17. This makes it easier to achieve vibration-damping performance suitable for the vibration which occurs in the structure.

In particular, by setting the Young's modulus of the elastic member 17 within the range mentioned above, the parameter F (contact force) in the previously-described equation for calculating the amount of energy damping ΔS can be increased without a decrease in the parameter δ (relative displacement of the contact portion). Thus, the vibration (or noise) which occurs in the structure can be very successfully damped. Increasing the contact area of the elastic member 17 means increasing the parameter dx in the previously-described equation for calculating the amount of energy damping ΔS.

In the elastic member 17 shown in FIG. 8A or each of the elastic members 27 to 47 shown in FIGS. 9A to 9C, the corners or the longitudinal ends of the plate member are shaped as convex curves. In other words, the corners or ends of the elastic members 17 to 47 are rounded rather than being angular.

As previously described, the elastic member 17 (or each of the elastic members 27 to 47) may be any plate member. Although the holding member 16 (the holding member 26 or 36) is a plate member similarly to the elastic member 17, the holding member 16 need not be a plate member but may be any other kind of member that can hold the elastic member 17 on the surface of the structure. That is, the holding member 16 is not limited to having a particular shape and may have any shape as long as the holding member 16 can hold the elastic member 17 in contact with the surface of the structure. For example, the holding member 16 (or the holding member 26 or 36) may have a three-dimensional shape (block shape) instead of a planar shape such as that of a plate member.

When, as in the present embodiment, the structure is the hermetic enclosure 1 and both the inner surface (ceiling surface) of the upper hermetic enclosure 1a and the inner surface (bottom surface) of the lower hermetic enclosure 1b are curved and convex outward, the holding surface of each holding member 16 that holds a corresponding one of the elastic members 17 has a curvature conforming to the curved surface of the structure. In other words, the holding member 16 includes a portion having a curvature conforming to the curved surface of the structure, and the surface of that portion serves as the holding surface for holding the elastic member 17.

Alternatively, the holding member 16 may be plate-shaped in part. For example, the fixing portions 16b may have a three-dimensional shape (block shape), and the portion having the holding surface may be plate-shaped. When the holding member 16 is a plate member or plate-shaped in part, as shown in FIG. 3 or 5, the plate-shaped portion of the holding member 16 is thicker than the elastic member 17 which is a plate member. Thus, the holding member 16 can successfully hold the elastic member 17 and avoid being unnecessarily large.

When both the holding member 16 and the elastic member 17 are plate members, these members 16 and 17 may be formed using plates (so-called iron plates) made of a known iron-based material. The use of such iron plates can downsize the vibration-damping devices 18 and 19 and reduce the cost of the vibration-damping devices 18 and 19. Thus, the use of the vibration-damping devices 18 and 19 in a hermetic compressor can prevent an increase in the size or cost of the hermetic compressor, leading to the hermetic compressor being compact and inexpensive. In the examples described later, an SK material is used as the elastic member 17, and a steel material is used as the holding member 16.

The elastic member 17 is not limited to including a particular number of positioning protrusions 17a, and the number of the positioning protrusions 17a may be any number equal to or greater than two. The positioning holes 16a of the holding member 16 are located to receive the positioning protrusions 17a; thus, the number of the positioning holes 16a is equal to the number of the positioning protrusions 17a. The fact that there are a plurality of positioning holes 16a and the same number of positioning protrusions 17a contributes to appropriate positioning of the elastic member 17 held by the holding member 16 relative to the structure (the hermetic enclosure 1 in the present embodiment), although whether the elastic member 17 is appropriately positioned depends also on other factors such as the shapes of the elastic member 17 and the holding member 16.

The positioning holes 16a and the positioning protrusions 17a are not limited to having particular shapes. In the present embodiment, as shown in FIGS. 2 to 5, the positioning holes 16a and the positioning protrusions 17a are circular. Alternatively, the positioning holes 16a and the positioning protrusions 17a may be rectangular, elliptical, or triangular. The positioning holes 16a and the positioning protrusions 17a may be elongate; that is, the positioning holes 16a may be holes having a longitudinal direction and the positioning protrusions 17a may be protrusions having a longitudinal direction. The positioning holes 16a and the positioning protrusions 17a are not limited to having particular dimensions. The dimensions of the positioning holes 16a and the positioning protrusions 17a can be set as appropriate depending on various factors such as the areas over which the elastic member 17 and the holding member 16 extend.

The positioning holes 16a are not limited to being at particular locations on the holding member 16, and the positioning protrusions 17a are not limited to being at particular locations on the elastic member 17. The locations of the positioning holes 16a and the positioning protrusions 17a can be set as appropriate depending on factors such as the shapes of the holding member 16 and the elastic member 17. In the present embodiment, as previously described, both the holding member 16 and the elastic member 17 are plate members having a longitudinal direction (primary direction); thus, the elastic member 17 can be successfully positioned by a simple configuration in which the plurality of positioning holes 16a are aligned in the longitudinal direction and the plurality of positioning protrusions 17a are aligned in the longitudinal direction.

In the present embodiment, only one elastic member 17 is held by the holding member 16. This is not limiting on the present disclosure, and two elastic members 17 or three or more elastic members 17 may be held by the holding member 16. In the present embodiment, one elastic member 17 is held by one plate-shaped holding member 16. This is not limiting on the present disclosure, and one elastic member 17 may be held by two holding members 16 or three or more holding members 16. The use of one holding member 16 to hold one elastic member 17 is preferred in order to minimize the number of the required members.

In the case where the structure (e.g., the hermetic enclosure 1 of the hermetic compressor) to which the vibration-damping devices 18 and 19 are attached exhibits many resonance frequency peaks, a plurality of elastic members 17 can be held on the structure to address the many peaks. Thus, the many peaks can be successfully attenuated, and the vibration (or noise) can be very successfully damped.

In the present embodiment, as shown in FIG. 1, the two vibration-damping devices, namely the upper vibration-damping device 18 and the lower vibration-damping device 19, are attached to the hermetic enclosure 1, but this is not limiting on the present disclosure. For example, only the upper vibration-damping device 18 may be attached to the hermetic enclosure 1, or only the lower vibration-damping device 19 may be attached to the hermetic enclosure 1, or three or more vibration-damping devices may be attached to the hermetic enclosure 1. According to the present disclosure, at least one vibration-damping device attached to the hermetic enclosure 1 suffices to achieve a satisfactory vibration-damping action. However, the use of a plurality of vibration-damping devices can attenuate a plurality of resonance frequency peaks of the hermetic enclosure 1 and achieve a further enhanced vibration-damping effect.

In the present embodiment, as shown in FIGS. 1 to 5, both the vibration-damping devices 18 and 19 are located on the inner surface of the hermetic enclosure 1. This is not limiting on the present disclosure, and the vibration-damping devices 18 and 19 may be located on the outer surface of the hermetic enclosure 1. That is, the vibration-damping devices 18 and 19 are not limited to being at particular locations but may, depending on various factors related to the structure that vibrates, be attached at any suitable locations on the surface of the structure. Specific examples of the location at which the vibration-damping device 18 or 19 is attached include a location corresponding to a center in a natural vibration mode. There are different natural vibration mode centers for different frequencies of vibration to be damped. In the examples described later, the vibration-damping device is attached at a location corresponding to a natural vibration mode center for a frequency of 4 to 6 kHz.

In the case of the hermetic compressor, as previously described, the vibration-damping devices 18 and 19 are located on the inner surface of the hermetic enclosure 1. In each of the vibration-damping devices 18 and 19, the elastic member 17 is held by the holding member 16 without being fixed to the hermetic enclosure 1; thus, the elastic member 17 and the holding member 16 could resonate with each other. Although this resonance could produce noise, such resonance-induced noise can be isolated by the hermetic enclosure 1 since the vibration-damping devices 18 and 19 are located on the inner surface of the hermetic enclosure 1.

In the present embodiment, the vibration-damping device according to the present disclosure has been described in detail using an example where the vibration-damping device is used in a hermetic compressor (an example where the structure that vibrates is a hermetic enclosure). The present disclosure is not limited to this example and, as previously mentioned, is applicable in any fields other than the filed of hermetic compressors. For example, the vibration-damping device according to the present disclosure can be used in a refrigerator, an air conditioner, or any other machine.

In the case where the vibration-damping device according to the present disclosure is used in a refrigerator, the structure that vibrates is the main body of the refrigerator, and the vibration-damping device according to the present disclosure can be attached, for example, to a side surface of the main body of the refrigerator. In the case where the vibration-damping device according to the present disclosure is used in an air conditioner, the structure that vibrates is, for example, an outdoor unit of the air conditioner. In this case, the vibration-damping device according to the present disclosure can be attached, for example, to a wall surface of the outdoor unit.

According to the present disclosure, as described above, a satisfactory vibration-damping action on a structure that vibrates can be achieved by a simple configuration, especially when the structure has a resonance frequency, and noise arising from the vibration of the structure can also be reduced or mitigated. Thus, the present disclosure is applicable to a wide variety of industrial products.

### Examples

Hereinafter, the present disclosure will be described more specifically based on examples and comparative examples. The present invention is not limited to the examples described below. Those skilled in the art can make various changes, modifications, or alterations without departing from the scope of the present invention.

### (Example 1)

An upper hermetic enclosure 1a of a hermetic compressor was prepared. An SK material having a length of 50 mm, a width of 18 mm, and a thickness of 0.4 mm was used as an elastic member 17, and a steel plate having a length of 80 mm, a width of 30 mm, and a thickness of 2 mm was used as a holding member 16.

The elastic member 17 was placed between the ceiling surface of the upper hermetic enclosure 1a and the holding member 16, and the elastic member 17 and the holding member 16 were positioned and pressed. An electric current was applied to fixing portions 16b of the holding member 16 to melt the fixing portions 16b and fix the fixing portions 16b to the inner surface of the upper hermetic enclosure 1a (see FIG. 6). Thus, an upper vibration-damping device 18 was attached to the inner surface (ceiling surface) of the upper hermetic enclosure 1a. This is how a test sample according to Example 1 was obtained (see FIG. 2).

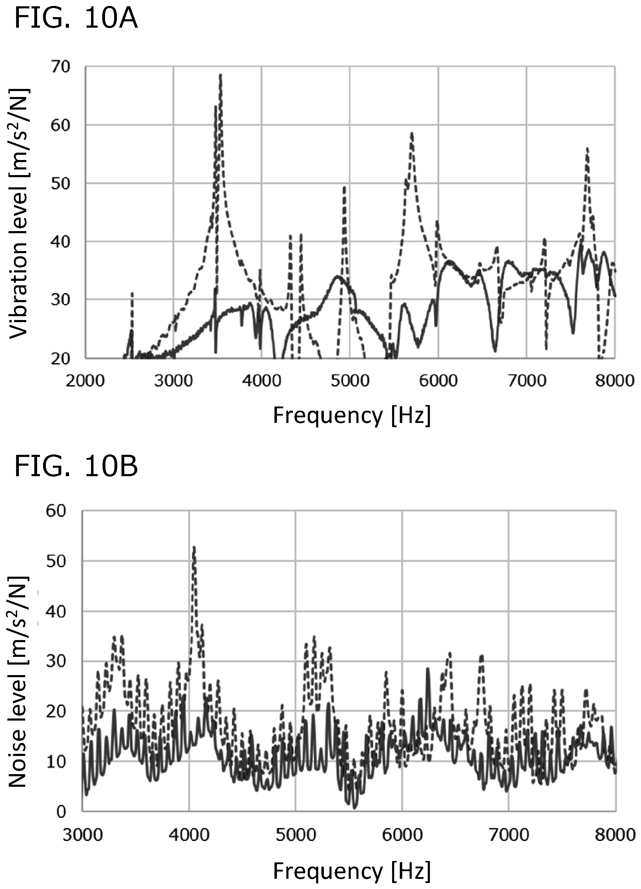

A hermetic compressor including the test sample according to Example 1 was prepared. An acceleration pick-up was mounted on the upper hermetic enclosure 1a, and the hermetic compressor not in operation was subjected to an impact test. In this impact test, the hermetic compressor was allowed to collide with the ground in the vertical direction, and an acceleration signal indicating an acceleration in the impact direction was measured. The measured acceleration signal was subjected to frequency analysis using an FFT (Fast Fourier Transform) analyzer to determine a power spectrum. The obtained result, namely, the relationship of the vibration level with respect to the frequency, is shown in FIG. 10A.

Furthermore, the hermetic compressor was brought into operation, and noise produced by the operating hermetic compressor was measured by capacitor microphones located 100 mm away from the hermetic compressor in four different directions. The measured noise signal was subjected to frequency analysis using an FFT analyzer to determine a power spectrum. The obtained result, namely, the relationship of the noise level with respect to the frequency, is shown in FIG. 10B.

### (Comparative Example 1)

The vibration level and the noise level of the upper hermetic enclosure 1a were measured in the same manner as in Example 1, except that the upper hermetic enclosure 1a without the upper vibration-damping device 18 attached thereto was used as a test sample according to Comparative Example 1. The relationship of the vibration level with respect to the frequency is shown in FIG. 10A, and the relationship of the noise level with respect to the frequency is shown in FIG. 10B.

In FIGS. 10A and 10B, the dashed lines represent the vibration level (unit: m/s²/N) and the noise level (unit: dB) of the test sample according to Comparative Example 1 (the upper hermetic enclosure 1a alone), and the solid lines represent the vibration level (unit: m/s²/N) and the noise level (unit: dB) of the test sample according to Example 1 (the upper vibration-damping device 18 including the upper vibration-damping device 18).

### (Comparison of Example 1 and Comparative Example 1)

It is clearly seen from the results shown in FIGS. 10A and 10B that, for the test sample according to Comparative Example 1 (dashed lines in the figures), many vibration peaks were observed in the vibration level and many noise peaks were observed in the noise level. In contrast, for the test sample according to Example 1 (solid lines in the figures), the vibration peaks of the upper hermetic enclosure 1a were significantly attenuated, and the noise peaks of the upper hermetic enclosure 1a were also significantly reduced.

As previously described, both the elastic member 17 and the holding member 16 are plate members made of an iron material. The upper vibration-damping device 18 including these plate members can be attached merely by placing the plate members on each other and fixing them in position. Such an upper vibration-damping device 18 is simpler in configuration than conventional vibration-damping members, and the placement of the upper vibration-damping device 18 does not require any large volume of space. Thus, the use of the upper vibration-damping device 18 in a hermetic compressor can reduce or prevent an increase in the size of the hermetic compressor and effectively reduce an increase in the cost of the hermetic compressor, leading to the hermetic compressor being compact and inexpensive.

The hermetic compressor according to the present disclosure may have a configuration in which the electric element 2 is inverter-driven at a plurality of operation frequencies. In this case where the compression element 3 performs the compression process at varying speeds, it is envisaged that the frequency at which the upper hermetic enclosure 1a is vibrated can also vary. However, as is clear from the results shown in FIGS. 10A and 10B, the upper vibration-damping device 18 can exhibit a damping effect over a wide range of frequencies; thus, the upper vibration-damping device 18 can very successfully achieve a vibration-damping action and a reduction in noise.

### (Example 2)

A lower hermetic enclosure 1b of a hermetic compressor was prepared. An elastic member 17 and a holding member 16 identical to those in Example 1 were used, and a lower vibration-damping device 19 was attached to the inner surface (bottom surface) of the lower hermetic enclosure 1b in the manner as described in Example 1. Thus, a test sample according to Example 2 was obtained (see FIG. 4). In the test sample according to Example 2, a given amount of lubricating oil 7 was retained in the lower hermetic enclosure 1b to simulate the state of a hermetic compressor in actual use.

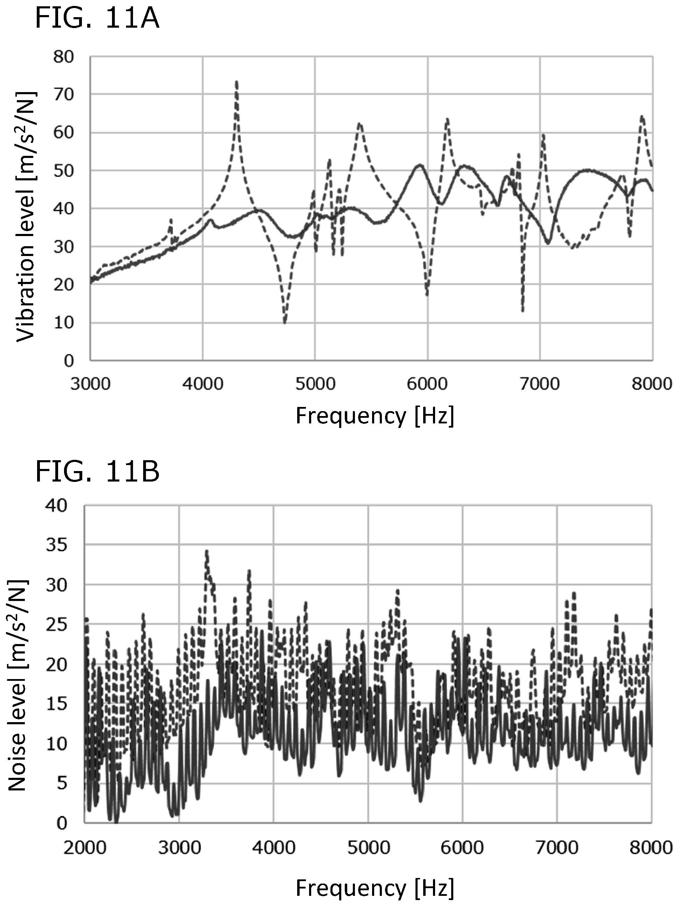

For the test sample according to Example 2, the vibration level and the noise level of the lower hermetic enclosure 1b were measured in the manner as described in Example 1. The relationship of the vibration level with respect to the frequency is shown in FIG. 11A, and the relationship of the noise level with respect to the frequency is shown in FIG. 11B.

### (Comparative Example 2)

The vibration level and the noise level of the lower hermetic enclosure 1b were measured in the same manner as in Example 2, except that the lower hermetic enclosure 1b without the lower vibration-damping device 19 attached thereto was used as a test sample according to Comparative Example 2. The relationship of the vibration level with respect to the frequency is shown in FIG. 11A, and the relationship of the noise level with respect to the frequency is shown in FIG. 11B.

Also in the test sample according to Comparative Example 2, a given amount of lubricating oil 7 was retained in the lower hermetic enclosure 1b. In FIGS. 11A and 11B, the dashed lines represent the vibration level (unit: m/s²/N) and the noise level (unit: dB) of the test sample according to Comparative Example 2, and the solid lines represent the vibration level (unit: m/s²/N) and the noise level (unit: dB) of the test sample according to Example 2.

### (Comparison of Example 2 and Comparative Example 2)

It is clearly seen from the results shown in FIGS. 11A and 11B that, for the test sample according to Comparative Example 2 (dashed lines in the figures), many vibration peaks were observed in the vibration level and many noise peaks were observed in the noise level, as with the case of the test sample according to Comparative Example 1. In contrast, for the test sample according to Example 2 (solid lines in the figures), the vibration peaks of the lower hermetic enclosure 1b were significantly attenuated and the noise peaks of the lower hermetic enclosure 1b were also significantly reduced, as with the case of the test sample according to Example 1.

As mentioned above, a given amount of lubricating oil 7 was retained in the lower hermetic enclosure 1b both in the test sample according to Comparative Example 2 and the test sample according to Example 2. The results obtained for the test sample according to Example 2 clearly reveal that the lower vibration-damping device 19 can exhibit a satisfactory vibration-damping action and noise-reducing effect even when immersed in the lubricating oil 7.

As described above, the vibration-damping devices 18 and 19 according to the present disclosure can effect slight sliding displacements between the hermetic enclosure 1 and the elastic members 17, thereby exhibiting a friction damping effect. Thus, as demonstrated by the results in Examples 1 and 2, the vibration-damping devices 18 and 19 can reduce, mitigate, or suppress (damp) vibration of the hermetic enclosure 1 and reduce noise arising from the vibration of the hermetic enclosure 1.

In addition, the load that the elastic members 17 apply to the hermetic enclosure 1 depends on the elasticity of the elastic members 17, and thus there is little variation in the load that the vibration-damping devices 18 and 19 apply to the hermetic enclosure 1 (structure). This is why the vibration-damping devices 18 and 19 can very stably exhibit a friction damping effect.

Furthermore, as demonstrated by the results in Examples 1 and 2, the vibration-damping devices 18 and 19 can exhibit a friction damping effect on three-dimensional vibration of the hermetic enclosure 1. Thus, the vibration-damping devices 18 and 19 can attenuate a plurality of resonance frequency peaks of the hermetic enclosure 1.

Hence, when attached to a reciprocating-type hermetic compressor (see FIG. 1), the vibration-damping devices 18 and 19 can reliably reduce harmonic noise specific to the reciprocating-type hermetic compressor and having a frequency in a resonance frequency band (from 2 to 8 kHz).

The present invention is not limited to the embodiments described above, and various modifications can be made insofar as the modifications come within the scope as defined by the appended claims. The technical scope of the present invention encompasses embodiments obtained by combining technical features disclosed in different embodiments or variants.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present invention is applicable widely and suitably in various fields where it is desired to reduce, mitigate, or suppress (damp) vibration of a structure that vibrates. Typically, for example, the present invention is applicable widely and suitably in the field of hermetic compressors where vibration of hermetic enclosures produces noise.
It follows a list of further embodiments of the invention:
Embodiment 1. A vibration-damping device comprising:
   a plate-shaped elastic member having elasticity and deformable to be in contact with a surface of a structure that vibrates; and
   a holding member that holds the elastic member in contact with the surface of the structure, wherein
   the holding member is fixed in part to the surface of the structure, with a given gap between the surface of the structure and the holding member, and
   the elastic member is held between the holding member and the surface of the structure and in contact with the surface of the structure without being fixed to the surface of the structure.
Embodiment 2. The vibration-damping device according to embodiment 1, wherein
   the surface of the structure is curved, and
   the holding member includes a portion having a curvature conforming to the curved surface of the structure.
Embodiment 3. The vibration-damping device according to embodiment 1 or 2, wherein the plate-shaped elastic member includes a corner or a longitudinal end shaped as a convex curve.
Embodiment 4. The vibration-damping device according to embodiment 1 or 2, wherein
   the elastic member includes opposite surfaces, one of which is a non-contact surface that does not contact the surface of the structure,
   the non-contact surface includes a plurality of protrusions, and
   the holding member includes a plurality of holes each of which is located to receive a corresponding one of the plurality of protrusions.
Embodiment 5. The vibration-damping device according to embodiment 1 or 2, wherein
   the holding member includes a plate-shaped portion that holds the elastic member, and
   the plate-shaped portion is thicker than the elastic member.
Embodiment 6. The vibration-damping device according to embodiment 1 or 2, wherein
   the holding member holds the elastic member while biasing the elastic member toward the surface of the structure.
Embodiment 7. The vibration-damping device according to embodiment 1 or 2, wherein
   the elastic member is made of a metal material and quench-hardened.
Embodiment 8. The vibration-damping device according to embodiment 1 or 2, wherein
   the structure is a hermetic enclosure of a hermetic compressor, and
   the surface of the structure is an inner surface of the hermetic enclosure.
Embodiment 9. A hermetic compressor comprising:
   a hermetic enclosure;
   an electric element including a stator and a rotor; and
   a compression element driven by the electric element to compress a fluid, wherein
   the electric element and the compression element are housed in the hermetic enclosure,
   a lubricating oil is retained in the hermetic enclosure,
   the hermetic compressor further comprises a vibration-damping device attached to an inner surface of the hermetic enclosure,
   the vibration-damping device includes
      a plate-shaped elastic member having elasticity and deformable to be in contact with the inner surface of the hermetic enclosure, and
      a holding member that holds the elastic member in close contact with the inner surface of the hermetic enclosure,
   the holding member is fixed in part to the inner surface of the hermetic enclosure, with a gap of a given width between the inner surface of the hermetic enclosure and the holding member, and
   the elastic member is held between the holding member and the inner surface of the hermetic enclosure and in contact with the inner surface of the hermetic enclosure without being fixed to the surface of the structure.
Embodiment 10. The hermetic compressor according to embodiment 9, wherein
   the vibration-damping device is attached to at least an upper inner surface of the hermetic enclosure or a lower inner surface of the hermetic enclosure.

### Reference Signs List

1: hermetic enclosure
1a: upper hermetic enclosure
1b: lower hermetic enclosure
2: electric element
3: compression element
4: compressor main body
5: suspension spring
5a: spring support
6: refrigerant gas
7: lubricating oil
8: suction pipe
9: discharge pipe
10: shaft
11: cylinder block
12: piston
13: coupler
14: rotor
15: stator
16: holding member
16a: positioning hole
16b: fixing portion
17: elastic member
17a: positioning protrusion
18: upper vibration-damping device
19: lower vibration-damping device
26: holding member
26a: positioning hole
26b: fixing portion
27: elastic member
27a: positioning protrusion
36: holding member
36a: positioning hole
36b: fixing portion
37: elastic member
37a: positioning protrusion
47: elastic member
47a: positioning protrusion

## Claims

1. A vibration-damping device comprising:
a plate-shaped elastic member having elasticity and deformable to be in contact with a surface of a structure that vibrates; and
a holding member that holds the elastic member in contact with the surface of the structure, wherein
the holding member is fixed in part to the surface of the structure, with a given gap between the surface of the structure and the holding member,
the elastic member has a Young's modulus of 100,000 to 300,000 N/mm², and
the elastic member is held between the holding member and the surface of the structure and in contact with the surface of the structure without being fixed to the surface of the structure.

2. The vibration-damping device according to claim 1, wherein
the surface of the structure is curved, and
the holding member includes a portion having a curvature conforming to the curved surface of the structure.

3. The vibration-damping device according to claim 1 or 2, wherein the plate-shaped elastic member includes a corner shaped as a convex curve or a longitudinal end shaped as a convex curve.

4. The vibration-damping device according to claim 1 or 2, wherein
the elastic member includes opposite surfaces, one of which is a non-contact surface that does not contact the surface of the structure,
the non-contact surface includes a plurality of protrusions, and
the holding member includes a plurality of holes each of which is located to receive a corresponding one of the plurality of protrusions.

5. The vibration-damping device according to claim 1 or 2, wherein
the holding member includes a plate-shaped portion that holds the elastic member, and
the plate-shaped portion is thicker than the elastic member.

6. The vibration-damping device according to claim 1 or 2, wherein
the holding member holds the elastic member while biasing the elastic member toward the surface of the structure.

7. The vibration-damping device according to claim 1 or 2, wherein
the elastic member is made of a metal material and quench-hardened.

8. The vibration-damping device according to claim 1 or 2, wherein
the structure is a hermetic enclosure of a hermetic compressor, and
the surface of the structure is an inner surface of the hermetic enclosure.

9. A hermetic compressor comprising:
a hermetic enclosure;
an electric element including a stator and a rotor; and
a compression element driven by the electric element to compress a fluid, wherein
the electric element and the compression element are housed in the hermetic enclosure,
a lubricating oil is retained in the hermetic enclosure,
the hermetic compressor further comprises a vibration-damping device attached to an inner surface of the hermetic enclosure,
the vibration-damping device includes
a plate-shaped elastic member having elasticity and deformable to be in contact with the inner surface of the hermetic enclosure, and
a holding member that holds the elastic member in close contact with the inner surface of the hermetic enclosure,
the holding member is fixed in part to the inner surface of the hermetic enclosure, with a gap of a given width between the inner surface of the hermetic enclosure and the holding member,
the elastic member has a Young's modulus of 100,000 to 300,000 N/mm², and
the elastic member is held between the holding member and the inner surface of the hermetic enclosure and in contact with the inner surface of the hermetic enclosure without being fixed to the surface of the structure.

10. The hermetic compressor according to claim 9, wherein
the vibration-damping device is attached to at least an upper inner surface of the hermetic enclosure or a lower inner surface of the hermetic enclosure.
